Europäisches Patentamt

**European Patent Office**

Office européen des brevets

(11) Publication number: **0 059 068**
**A1**

(12) **EUROPEAN PATENT APPLICATION**

(21) Application number: **82300803.2**

(22) Date of filing: **17.02.82**

(51) Int. Cl.³: **A 61 C 5/08**

(30) Priority: **17.02.81 GB 8104969**

(71) Applicant: **Segal, Alan Julian, 13 Park Avenue, Hale Cheshire (GB)**

(43) Date of publication of application: **01.09.82 Bulletin 82/35**

(84) Designated Contracting States: **AT CH DE FR GB LI SE**

(72) Inventor: **Segal, Alan Julian, 13 Park Avenue, Hale Cheshire (GB)**

(54) **Dental pin for anchoring cast restorations.**

(57) The pin comprises a threaded portion (11) for self-tapping insertion in a bore formed in tooth dentine, a frusto-conical shoulder portion (16), a shank (12) with at one end a flat (14) and annular groove (15) so that the pin can be latched in a standard contra-angle handpiece, and an undercut (19) permitting the shank (12) to automatically separate from the remainder of the pin. The pin is handpiece-inserted into said bore in the tooth dentine and when the shoulder (16) engages a correspondingly shaped portion of the cast restoration, the undercut (19) automatically shears-off. The pin can be finally hand-tightened by engaging a hand-wrench on the shaped portion (18).

DENTAL  PIN  FOR  ANCHORING  CAST  RESTORATIONS

The invention relates to a dental pin for anchoring cast restorations comprising a threaded portion for self-tapping insertion in a bore formed in tooth dentine, a shoulder portion for abutting against a portion of the cast restoration, a connecting portion including a shank capable of locking directly into a dental handpiece, and a weakened portion intermediate the connecting portion and the shoulder portion for permitting shearing and separation of the connecting portion from the remainder of the dental pin.

A dental pin for anchoring cast restorations is known of the form comprising a threaded portion for self-tapping insertion in a bore formed in tooth dentine, a shoulder portion for abutting against a portion of the cast restoration, and a flanged end portion. The flanged end portion is intended to engage in a slot formed at one end of a separate chuck member. The other end of the chuck member is formed with a flat and a part-annular groove which enables the chuck member to be latched in a special automatic-clutch type handpiece. When the shoulder portion comes into engagement with the said portion of the cast restoration, the clutch arrangement of the special handpiece permits the handpiece to continue rotating even though the dental pin and special chuck are now stationary, thus preventing stripping of the thread or damage to the dentine.

With a dental pin of this kind, the procedure carried out by the dentist has the complication of requiring the dentist to attach the dental pin to the separate chuck member as well as loading the separate chuck member in the handpiece. When the pin has been driven home it is necessary for the dentist to disengage the separate chuck member from the dental pin by manipulating the handpiece. Furthermore, the procedure requires the use of a special type of handpiece with a clutch mechanism,

and because during the procedure the flanged end of the dental pin engages in the slotted end of the separate chuck member there is always the danger of the dental pin falling into the patient's mouth.

The invention as claimed is intended to remedy the drawback of a relatively complicated and expensive procedure and at the same time to provide a safer method for anchoring cast resotrations.

The chief advantages offered by the invention are simplicity and convenience together with improved safety. Any standard handpiece is used and the dental pin itself locks in the handpiece, thus eliminating the risk of part of the assembly dropping in the patient's mouth. Furthermore, it is not required to disengage the parts at the end of the procedure because the disengagement takes place automatically.

One way of carrying out the invention is described in detail below with reference to the accompanying drawings which illustrate only one specific embodiment, in which:-

Figure 1 is a front elevation of a stainless steel dental pin for anchoring cast restorations,

Figure 2 is a front elevation of an impression pin used in preparing a cast restoration,

Figure 3 is an end elevation of the impression pin of Figure 2,

Figure 4 is an elevation of a waxing-up pin also used in preparing a cast restoration,

Figure 5 is a section through the upper jaw showing two upper central incisor teeth which have been prepared prior to bridging,

Figure 6 is a sectional side elevation on the line VI-VI of Figure 5 through one of the central incisor teeth,

Figure 7 is a section through the upper palate showing the two incisor teeth of Figure 5 with a bridge placed on the teeth and in process of being secured thereto,

Figure 8 is a sectional side elevation on the line VIII-VIII of Figure 7 through one of the incisor teeth of Figure 7,

Figure 9 is a sectional side elevation, to an enlarged scale, of part of the tooth structure of Figure 8, showing a dental pin in process of being utilised to anchor the bridge,

Figure 10 is a section through the lower jaw showing a lower right first molar and a first and second lower right pre-molar, a splint having been applied thereto and anchored utilising dental pins according to the invention,

Figure 11 is a plan of the first molar and first and second pre-molar teeth of Figure 10, and

Figure 12 is a section through the lower palate showing a first pre-molar and first molar, a cast splint having been attached within an inter-proximal box and anchored by dental pins according to the invention.

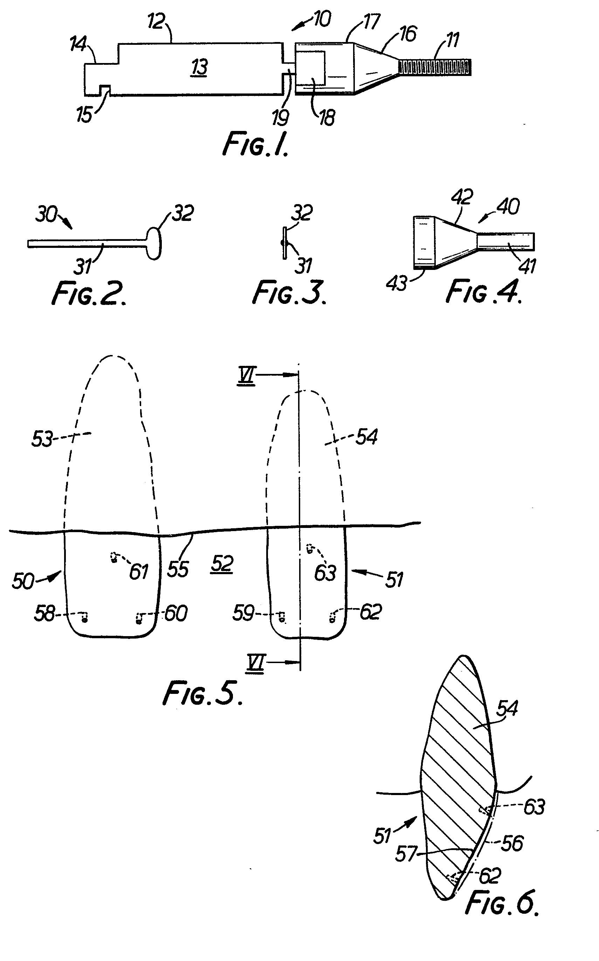

Referring now to Figure 1, the dental pin generally indicated at 10 has a screw-threaded portion 11 at one end thereof. The threaded portion 11 may have an outside diameter of 0.76mm and a length of 2.7mm. The dental pin 10 includes a connecting portion 12 comprising an elongated circular cylindrical shank 13. The diameter of the shank 13 is larger than that of the threaded portion 11 and is such that the shank 13 will be an easy sliding fit in a latching-type dental handpiece. The shank 13 is shaped at its free end, providing a flat 14 and part-annular groove 15 so that the shank 13 can co-operate with the latch mechanism of a latching- type dental handpiece and be locked thereby. The portion of pin 10 adjacent the threaded portion 11 is constituted by a frusto-conical portion 16 having an included angle of, for example, 32$^{\circ}$. The axial length of the frusto-conical portion 16 may be, for example, 3mm. Adjacent the frusto-conical portion 16 and on the opposite side to the threaded portion 11 the pin 10 extends a short distance in the form of a circular-cylindrical portion 17, having a diameter equal to that of the shank 13. The circular-cylindrical portion 17 is formed with a pair of diametrically opposed flat portions disposed parallel to each other, one of which is indicated at 18, which serve to provide purchase for a correspondingly shaped hand-wrench (not shown).

Intermediate the flat portions 18 and the shank 13 is a reduced diameter portion or neck 19 having a diameter less than the root diameter of the threaded portion 11 so as to provide a fracture or shear portion.

Referring to Figures 2 and 3, the impression pin generally indicated at 30 is made of plastics material and has a parallel shank 31 of circular-cylindrical form. The impression pin 30 has a generally oval-shaped head 32 which is flattened in cross-section, as seen in Figure 3.

- 5 -

Referring to Figure 4, the waxing-up pin generally indicated at 40 is made of stainless steel and comprises a circular-cylindrical shank 41 formed integrally with a frusto-conical portion 42 having an included angle of, for example $30^{O}$, that is to say $2^{O}$ less than the included angle of the frusto-conical portion 16 of the dental pin 10 of Figure 1. A short circular-cylindrical portion 43 having a diameter the same as that of the portion 17 of the pin 10 is formed integrally with the larger diameter end of the frusto-conical portion 42.

Referring now to Figures 5 and 6, two central incisor teeth 50 and 51 are separated by a gap 52 created by a missing central incisor tooth. The teeth 50 and 51 have roots 53 and 54 respectively, the gingival margin being indicated at 55. It is required to bridge the two teeth 50 and 51 using a cast restoration.

In an initial surgery procedure, the teeth 50 and 51 are prepared. The palatal surfaces of the teeth 50 and 51 are reduced with a high speed bur by a sufficient amount to allow for 1 to 1.5mm of gold that can be carved and placed in harmony with the occlusion without causing any interferences. The preparation is illustrated in Figure 6, where the broken line 56 indicates the original contour of the tooth 51 and the full line 57 indicates the tooth contour after the reduction.

Two holes 58 and 59 are drilled in parallel relationship in the prepared portions of the teeth 50 and 51 respectively. Furthermore, two holes 60 and 61 and drilled in non-parallel relationship in the reduced part of the tooth 50 and two holes 62 and 63 are drilled in non-parallel relationship in the reduced parts of the tooth 51. The drilling of the six holes 58,59, 60, 61, 62 and 63 is performed with a depth-limiting twist-drill having a diameter of, for example, 0.68mm and a length to a depth limiting shoulder of, for example,**3.0**mm. All entrances to the holes 58 to 63 are now bevelled with a no. 6 round bur.

Six impression pins 30 are now inserted one in each of the holes 58 to 63. The shanks 31 of the impression pins 30 are an easy sliding fit in the holes and are inserted to reach the inner ends of the holes.

An impression is now taken in the well-known manner. As the impression is withdrawn from the teeth 50 and 51, the oval-shaped heads 32 of the impression pins 30 assist in retaining the impression pins 30 embedded in the impression material.

The laboratory stage now commences, the impression being used to cast a model with a suitable die material in the well-known manner. The model is allowed to set and the impression is removed therefrom, the impression pins 30 remaining in the model. The impression pins 30 are now removed from the model.

The dental technician now prepares the model (not shown) in the well-known manner and inserts the shanks 41 of the four waxing-up pins 40 in each of the non-parallel holes in the model corresponding to the holes 60,61, 62, and 63 in the teeth 50 and 51. The shanks 41 of the waxing-up pins 40 are an easy sliding fit in the holes and are inserted sufficiently far for the frusto-conical portions 42 to engage the entrances of the holes. The free ends of the shanks 41 do not extend as far as the inner ends of the holes 60 to 63. Two impression pins 30 having the heads 32 removed are now placed one in each of the parallel holes in the model corresponding to the parallel holes 58 and 59 in
the teeth 50 and 51 respectively. The two impression pins 30 extend
to the inner ends of these parallel holes in the model.

The technician now waxes-up around the pins 30 and 40. The wax
is carved to produce the wax pattern for the restoration. Each of the
waxing-up pins 40 is now removed, leaving a conical bore in the wax
pattern corresponding to the frusto-conical portion 42. The impression
pins 30 which had been placed in the parallel holes of the model
remain as an integral part of the wax pattern. The projecting portions
of the impression pins 30 on the side of the pattern remote from the
model are now cut off flush with the surface of the pattern.

The wax pattern is now removed from the model and is centrifugally
cast in gold in well-known manner, that is to say it is invested in
a bed of plaster and placed in an oven which burns up the wax pattern
together with the pins in the parallel holes. Before being returned to
the surgery, the cast restoration is prepared and the conical apertures
in the bridge (corresponding to the holes 60 to 63 in the teeth 50
and 51) are drilled out at the smaller diameter end to ensure that
the twist-drill with depth-limiting shoulder as mentioned hereinbefore
will pass freely therethrough.

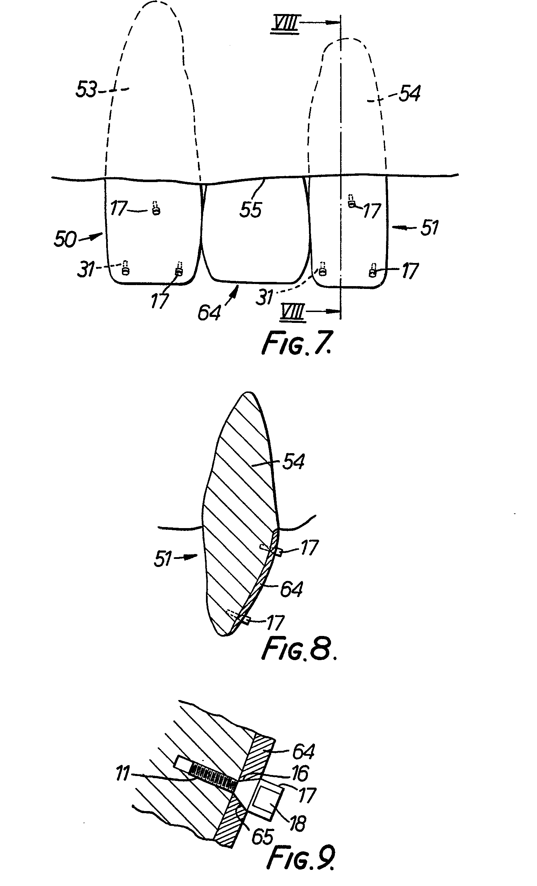

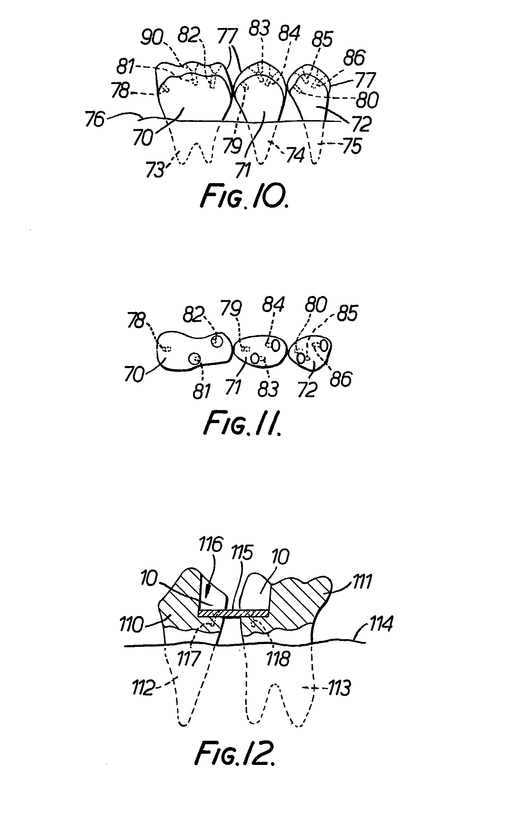

Referring now to Figures 7 to 9, the bridge indicated at 64
is placed on the teeth 50 and 51 to establish that the fit is correct
and that there are not interferences with the occlusion. The parallel
pins enter the holes 58 and 59 and assist in preventing the displacement
of the bridge.

- 8 -

The cementation procedure is now commenced. The teeth 50 and 51 are isolated and dried.

Any crown and bridge cement can be used but it is preferable that a cement is prepared having as long as possible a working time. The fitting surfaces of the bridge including the parallel pin surfaces are lightly coated with a thin mix of the cement, taking care to avoid the apertures for the non-parallel holes 60, 61, 62 and 63.

Although not essential, the prepared surfaces of the teeth 50 and 51 may in addition be coated with a thin mixture of cement.

The bridge is now placed on the teeth 50 and 51 so as to seat firmly. The non-parallel holes 60, 61, 62 and 63 are freed of any cement using, for example, a probe or reamer.

A dental pin 10 is now loaded and locked in a standard contra-angle handpiece and aligned with the hole 60 in the tooth 50. Running the handpiece at between slow and medium speed (for example, 3000 revolutions per minute) the dental pin 10 is brought into contact with the tooth causing the pin to self-thread into the hole 60. The pin 10 shears off at the weakened portion 19 when the frusto-conical portion 16 of the dental pin engages the frusto-conical shoulder portion 65 in the cast restoration 64 corresponding to the conical bore in the wax pattern. In some cases the pin 10 may shear off at weakened portion 19 just before the frusto-conical portion 16 of the pin 10 has engaged the frusto-conical shoulder 65 in the restoration 64.

The shank 13 of the pin 10 remaining in the handpiece
is now discarded and a second dental pin 10 is loaded and
locked in the handpiece.   This second dental pin 10 is
now inserted in the hole 62 in the tooth 51 in the same
manner.   A third dental pin 10 is now loaded in the handpiece and inserted in the remaining hole 61 of the tooth
50 and finally a fourth dental pin 10 is inserted in the
remaining hole 63 of the tooth 51.

The four dental pins 10 inserted in the non-parallel
holes 60-63 in the two teeth 50 and 51 are now hand-
tightened using the above mentioned hand-wrench purchasing
on the flat portions 18 to ensure that the frusto-conical
portions 16 of the pins 10 abut firmly against the conical
shoulders 65 formed in the bridge 64.

The dental pins 10 are now polished down flush with
the surface of the bridge 64 using a high speed bur and
all excess cement at the edges of the gold where it adjoins
the tooth is removed.

Finally the occlusion is tested to ensure that the
cemented bridge 64 does not interfere with the bite.

- 10 -

Referring now to Figures 10 and 11, the first molar 70 and first and second pre-molars 71 and 72 have roots 73, 74 and 75 respectively, the gingival margin being indicated at 76.

A vertically inserted full coverage occlusal cast splint 77 is shown attached to the teeth 73 to 75, six dental pins 10 having been utilised to anchor the splint.

The dental pins 10 are utilised to anchor the splint 77 in essentially the same manner as the pins 10 were used to anchor the bridge 64 described hereinbefore.

In the first surgery procedure, the occlusal surfaces of the teeth 70, 71 and 72 are reduced, three parallel holes 78, 79 and 80 and six non-parallel holes 81 to 86 are drilled. Impression pins 30 are inserted in the holes 78 to 86, and an impression is taken.

In the laboratory stage, the impression is used to cast a model, impression pins 30 with the heads 32 removed are inserted in the parallel holes 78 to 80 and waxing-up pins 40 are inserted in the non-parallel holes 81 to 86. The technician now waxes up around the pins 78 to 86, carves the wax, and removes, the waxing-up pins. The wax pattern is removed from the model and is centrifugally cast in gold.

The resulting cast restoration is prepared and polished and returned to the surgery.

In the second surgery procedure, the cast splint 77 is tested for a correct fit.  The fitting surfaces of the splint 77 are coated with cement and the splint is placed to seat firmly on the teeth 70 to 72.

Six dental pins are loaded successively in a standard contra-angle handpiece and inserted in the six non-parallel holes 81 to 86, the pins shearing off at the undercuts 19 when or shortly before the frusto-conical portions 16 engage the shoulders 90 in the splint 77.  The pins 10 are then hand-tightened using the hand-wrench against the shoulders 90 formed in the splints 77.

The above described steps in the splinting procedure have been referred to briefly as the various steps are the same in principle as the corresponding steps previously described in the bridging procedure.

Referring now to Figure 12, the first pre-molar 110 and first molar 111 have roots 112 and 113 respectively, the gingival margin being indicated at 114.  A cast splint 115 is shown placed within the inter-proximal box 116 and anchored to the teeth 110 and 111 by two anchoring pins 10.

- 12 -

The dental pins 10 are utilised to anchor the splint 115 in essentially the same manner as the pins were used to anchor the bridge 64 and the splint 77 described hereinbefore.

The steps in the splinting procedure with reference to Figure 12 are the same in principle as the corresponding steps previously described in the bridging procedure with reference to Figures 5 to 9 and the splinting procedure with reference to Figures 10 and 11, except that the tooth preparation involves the formation of an inter-proximal box and the splint 115 is anchored in this instance by only two dental pins 10, one applied to each tooth in holes 117 and 118 which are in non-parallel relationship.

In another embodiment of the invention, the dental pin 10 is modified by being provided with a tapering shank in place of the parallel shank 13. The taper is such that the diameter of the shank gradually decreases in the direction of the weakened portion 19.

In a further embodiment of the invention, the dental pin 10 is made in two parts of different materials. The shank 13 is made of plastics material and the threaded portion 11, frusto-conical portion 16, circular-cylindrical portion 17 and weakened or undercut portion 19 are formed

- 13 -

in a single piece in stainless steel.   The plastic shank 13 is moulded on to the undercut portion 19.  Alternatively, the undercut portion 19 may be formed on the side remote from the threaded portion with a flange or ball joint which is a press fit within a recess formed at the free end of the plastic shank 13, allowing the steel portion of the pin to pivot relative to the plastic shank.  The press fit would enable the steel portion of the pin to be permanently united to the plastic shank in that it would require force to remove the steel portion of the pin from the plastic shank 13.

It will be apparent that the dental anchoring pin described and illustrated herein, can provide a simple, fast and effective way of anchoring a variety of cast restorations.   At the same time, the illustrated dental anchoring pin has the advantage of safety in that the pin is locked to the handpiece during the insertion so that the danger of the pin falling into the patient's mouth is minimised.

- 14 -

CLAIMS:

1. A dental pin for anchoring cast restorations comprising a threaded portion (11) for self-tapping insertion in a bore formed in tooth dentine, a shoulder portion (16) for abutting against a portion of the cast restoration, and a connecting portion (13) for transmitting torque, characterised in that the connecting portion (13) includes a shank (12) capable of locking in a dental handpiece, a weakened portion (19) being provided intermediate the connecting portion (13) and the shoulder portion (16) for permitting shearing and separation of the connecting portion from the remainder of the dental pin.

2. A dental pin according to Claim 1, characterised in that one end of the shank (12) is formed with a flat (14) and a part-annular groove (15) whereby the shank can be latched in a latching-type dental handpiece.

3. A dental pin according to Claim 1 or 2, characterised in that a portion of the pin intermediate the shoulder portion (16) and the weakened portion (19) is shaped (18) to provide purchase for a hand-wrench to permit final hand-tightening of the pin.

4. A dental pin according to any preceding Claim, characterised in that the shoulder portion (16) is of frusto-conical form.

5. A dental pin according to any of Claims 1 to 4, characterised in that the pin is constituted by a single piece of material.

- 15 -

6.  A dental pin according to any of Claims 1 to 4, characterised in that the pin is made in two parts which are permanently united so as to avoid the danger of a part of the pin dropping into the patient's mouth.

0059068

1/3

Fig.1.

Fig.2.

Fig.3.

Fig.4.

Fig.5.

Fig.6.

FIG.7.

FIG.8.

FIG.9.

**Fig. 10.**

**Fig. 11.**

**Fig. 12.**

European Patent
Office

**EUROPEAN SEARCH REPORT**

Application number

EP 82 30 0803

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | FR - A - 2 347 027 (BIGGS) <br> * Page 5, lines 21-26; page 15, lines 3-19; figure 16 * | 1,4,5 | A 61 C 5/08 |
| Y | | 2,3,6 | |
| Y | FR - A - 2 293 184 (SMITH) <br> * Page 2, lines 13-25; page 3, lines 21-27; figures 1,2 * | 1,2,5, 6 | |
| Y | US - A - 3 395 455 (OVERBY & ZAHN) <br> * Column 5, lines 11-25; figure 12 * | 3 | **TECHNICAL FIELDS SEARCHED (Int.Cl. ³)** <br><br> A 61 C |
| A | GB - A - 1 347 226 (WEISSMAN) <br> * Page 2, line 118 à page 3, line 15; figures 6-8 * | | |

CATEGORY OF
CITED DOCUMENTS

X: particularly relevant if
taken alone
Y: particularly relevant if
combined with another
document of the same
category
A: technological background
O: non-written disclosure
P: intermediate document
T: theory or principle
underlying the invention
E: earlier patent document,
but published on, or after
the filing date
D: document cited in the
application
L: document cited for other
reasons

&: member of the same patent
family,
corresponding document

| X | The present search report has been drawn up for all claims | | |
|---|---|---|---|
| Place of search | Date of completion of the search | Examiner | |
| The Hague | 25-05-1982 | DURAND-SMET | |

EPO Form 1503.1 06.78